# EUROPEAN PATENT APPLICATION

(11) **EP 1 777 946 A2**
(43) Date of publication of application: **25.04.2007**
(21) Application number: 06010316.5
(22) Date of filing: 18.05.2006
(51) Int. Cl.: H04N 5/44

(54) **A remote commander**

(30) Priority: 20.10.2005 CN 200520045767
(71) Applicant: Shengda Computer (Shanghai) Co.,Ltd., Shanghai 201203 (CN)
(72) Inventor: Yao, Yanping, c/o Shengda Computers Co; Ltd, Shanghai 201203 (CN); Yan, Zhenghua, c/o Shengda Computers CO, LTD, Shanghai 201203 (CN)
(74) Representative: Kuhnen & Wacker

(57) **Abstract**

A remote commander is provided including a main body; a main processor module; a transmitter module and a receiver module; a processing unit and a storage module; function keys connected with and be controlled by the processing unit; a transmitting element and a receiving element; power supply positioned on the back of the case. The present invention device further comprises: a handgrip processing module connected with the main processor module; a remote control handgrip connected with said handgrip processing module; an encrypting code identify module connected with the main processor module; an encrypting code identify key is positioned on the main body connected with the encrypting code identify module. The present invention can be applicable to fulfill more operation functions and can make the operation with higher safety.

## Description

### BACKGROUND OF THE INVENTION

### Field of the Invention

The present invention relates to a remote control device. More specifically, a remote commander can operate any interactive entertainment terminal equipments more conveniently and more functionally.

### Description of the Related Art

Along with the development of technology, various entertainment devices such as TV sets, videocassette recorders, DVD players, game machines and other entertainment terminals are entering common family. You can find them everywhere in each home. The corresponding remote commander wherewith its convenient and speedy operation to these entertainment equipment becomes an absolutely necessarily item of these entertainment terminals.

Conventional remote commander including remote control boards for operating TV sets, videocassette recorders, DVD players and game machines are provided to fulfill all basic functions of home entertainment equipment, for instance, turn on/turn off the equipment, forward/backward rewinding, record/playback and pause, etc. Due to simple entertainment contents of conventional remote commanders, it cannot satisfy the safety requirements in special application occasions. In a special application, there are richer and more colorful contents such as to use a conventional TV set connect to Internet via a particular entertainment terminal, to receive the contents of internet via a TV set and to play internet game on the TV interface via a remote commander and its corresponding entertainment terminal equipment, etc. These multiplicity colorful interactive features may be realized with the operation that is more safety, more functional, more convenient and speedier.

Prior designs of a remote commander cannot satisfy the requirements for operating interactive entertainment terminals that need encrypting code identify and a remote control handgrip, and also cannot satisfy the operation demands of interactive terminal which requires higher safety, more agility and more convenient.

### SUMMARY OF THE INVENTION

The primary object of the present invention is by providing a remote commander with higher safety to operate the interactive entertainment terminal equipments.

In accordance with the primary object of the present invention and to solve the technology problems mentioned above, the present invention provides a remote commander, wherein the remote commander comprises: a main body; a remote control signal transmitting element and a remote control signal receiving element are positioned on the side of the remote commander; plurality function keys are positioned on the front face of the remote commander case; a power supply is positioned on the back of the case.

The present invention further comprises: a main processor module; a transmitter module and a receiver module connected with the main processor module respectively; a processing unit connected with the maim processor module; and a storage module connected with main processor module; the function keys positioned on the front face of the remote commander case connects with and is controlled by the processing unit; the transmitting element positioned on the side of the remote commander connects with and is controlled by the transmitter module; the receiving element positioned on the side of the remote commander connects with and is controlled by the receiver module.

The present invention device further comprises: a remote control handgrip positioned on the front of the remote commander case; an encrypting code identify key positioned on the main body case; a handgrip processing module connected with the main processor module; an encrypting code identify module connected with the main processor module; the remote control handgrip connects with and is controlled by handgrip processing module; the encrypting code identify key connects with and is controlled by the encrypting code identify module.

As a preferred embodiment, the present invention provided a remote commander, it further comprises: a cursor moving function key; a cursor moving control module; and the cursor moving control module connects with the main processor module; the cursor moving function key connects with and is controlled by the cursor moving control module.

Compare to the prior art, the present invention of a remote commander has the features that on the main processor module connected an encrypting code identify module and a handgrip processing module; and a code identify key connected with the encrypting code identify module; a remote control handgrip connected with a handgrip processing module. The present invention of a remote commander can do a safety encrypting setting for the interactive entertainment terminal equipments and can manipulate the interactive entertainment terminals via a handgrip.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:

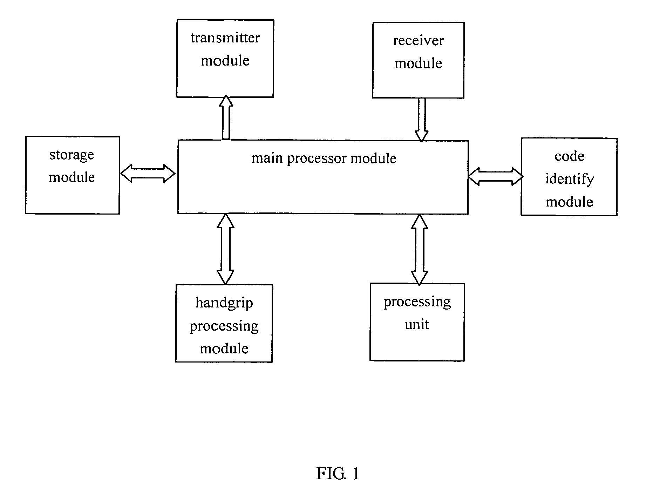

FIG 1 is a block diagram of present invention illustrating the module structures of a remote commander.

### DETAILED DESCRIPTION OF THE PREFERRED EMBODIMENTS

Referring to FIG 1, the present invention, a remote commander comprising: a main processor module; a transmitter module connected with the main processor module for sending signals; a receiver module connected with the main processor module for receiving signals; a processing unit connected with the maim processor module for controlling various function keys; a storage module connected with the main processor module for storing various information. And it further comprises: a handgrip processing module connected with the main processor module; an encrypting code identify module connected with main processor module; and a cursor moving control module connected with the main processor module.

In addition to the main body of the remote commander, the present invention of a remote commander further comprises: various function keys positioned on the front face of the remote commander case connect with and are controlled by the processing unit. A transmitting element and a receiving element of remote control signal are positioned on the side of the remote commander, thereinto, the transmitting element of remote control signal connects with and is controlled by a transmitter module; the receiving element of remote control signal connects with and is controlled by a receiver module. A handgrip positioned on the front face of the remote commander case connects with and is controlled by the handgrip processing module; an encrypting code identify function key positioned on the main body connects with and is controlled by encrypting code identify module. The device further comprises: a cursor moving function key connects with and is controlled by a cursor moving control module.

When a subscriber connects to the terminal server, he sends desired encrypting code to the receive port of a remote control device on the terminal equipment by operating the encrypting code identify key positioned on the remote commander case. The practical manner is as follows: after informing subscriber the time and mode for using dynamic encryption algorithm and sending dynamic encryption algorithm to the subscriber according to the regulation constituted by the terminal server of the entertainment equipment, the subscriber encrypts or decrypts the data package in accordance with the specific rules in the dynamic encryption algorithm. The subscriber may select to operate the terminal after passed identifies of encrypting code. Manipulating the handgrip of the present invention, a given infrared signal transmitted via signal transmitter is correctly received and decrypted by the entertainment terminal so that further drives and controls the terminal to do corresponding operation.

The present invention of a remote commander added a remote control handgrip controlled by a handgrip processing module and a remote control encrypting identify key controlled by a code identify module can set safety encrypting measures for the interactive entertainment terminal equipment and manipulate the equipment with a remote control handgrip.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A remote commander, comprising:
a main body of said remote commander; a remote control signal transmitting element and a remote control signal receiving element positioned on the side of said remote commander; plurality function keys positioned on the front face of the remote commander case; a power supply positioned on the back of the remote commander case;
it further comprising: a main processor module; a transmitter module and a receiver module connected with the main processor module respectively; a processing unit connected with said main processor module; and a storage module connected with said main processor module; said function keys positioned on the front face of said remote commander case connect with and are controlled by said processing unit; said transmitting element positioned on the side of said remote commander connects with and is controlled by said transmitter module; said receiving element positioned on the side of the remote commander connects with and is controlled by said receiver module;
wherein, said remote commander further comprising: a remote control handgrip positioned on the front of said remote commander case; an encrypting code identify key positioned on the main body case; a handgrip processing module connected with said main processor module; an encrypting code identify module connected with said main processor module; said remote control handgrip connects with and is controlled by said handgrip processing module; said encrypting code identify key connects with and is controlled by said encrypting code identify module.

2. The remote commander according to claim 1, wherein it further comprising: a cursor moving function key; a cursor moving control module; said cursor moving control module connected with said main processor module; said cursor moving function key connects with and is controlled by said cursor moving control module.

3. The remote commander according to claim 1 or 2, wherein said handgrip is positioned on the front of the remote commander case.
